# DEMANDE DE BREVET EUROPEEN

(11) **EP 4 650 224 A1**
(43) Date de publication de la demande: **19.11.2025**
(21) Numéro de dépôt: 25166518.8
(22) Date de dépôt: 27.03.2025
(51) Int. Cl.: B60R 9/045, B60R 9/06, B60R 9/10, B60P 3/06

(54) **DISPOSITIF D EMPORT DE QUADRICYCLE POUR TRACTEUR AGRICOLE**

(30) Priorité: 15.05.2024 FR 2404946
(71) Demandeur: CR Industry, 85000 La Roche-sur-Yon (FR)
(72) Inventeur: Cormerais, Baptiste, 44690 Maisdon sur Sèvre (FR); Richard, Clovis, 85170 Dompierre sur Yon (FR)
(74) Mandataire: Lequien, Philippe

(57) **Abrégé**

**Dispositif d'emport de quadricycle pour tracteur agricole**

L'invention concerne un dispositif (1) d'emport de quadricycle à moteur sur un tracteur agricole, comprenant :
- un cadre (2) présentant des points d'attache (21) à des bras de relevage avant ou des bras de relevage arrière d'un tracteur agricole ;
- un support (3) monté mobile sur le cadre (2) entre une position déployée dans laquelle le support (3) s'étend transversalement au cadre (2), au niveau d'une extrémité inférieure (201) du cadre (2), et une position rabattue dans lequel le support (3) est rabattu contre le cadre (2) ;
- des moyens de maintien du support (3) dans sa position rabattue ;
le support (3) en position déployée formant une plateforme d'emport d'un quadricycle à moteur.

## Description

### Domaine Technique

Le domaine de l'invention est celui de la conception et de la fabrication d'équipements de véhicules agricole.

L'invention concerne plus particulièrement un dispositif d'emport de véhicule à quatre roues sur un tracteur agricole.

### État de la technique

Dans le domaine agricole, il est souvent fait appel aux proches des agriculteurs pour véhiculer ces derniers entre différents lieux, afin d'éviter d'avoir à utiliser un tracteur agricole pour un déplacement quotidien. En effet, l'usage d'un tracteur a un coût économique et écologique, et il est souhaitable de le limiter.

Il est ainsi recherché une solution permettant d'améliorer la mobilité des utilisateurs de tracteurs agricoles pour leurs déplacements ne nécessitant pas l'usage du tracteur.

La recherche d'une telle solution doit toutefois prendre en compte certaines exigences, telle que la limitation des inconvénients relatifs à l'intégration d'un matériel sur un tracteur agricole, dont l'augmentation de l'encombrement du tracteur.

Plus généralement, dans le domaine des équipements montés sur les véhicules, il est connu le document de brevet publié sous le numéro US 5 938 395 A, qui décrit une plateforme destinée à être attelée sur un véhicule.

### Problème technique

L'invention a notamment pour objectif de répondre au besoin de l'art antérieur.

Plus précisément, l'invention a pour objectif de proposer une solution permettant d'améliorer la mobilité d'un utilisateur de tracteur agricole pour des trajets ne nécessitant pas l'usage du tracteur.

L'invention a également pour objectif de fournir une telle solution qui limite les inconvénients induits par l'usage de cette solution.

### Résumé de l'invention

Ces objectifs, ainsi que d'autres qui apparaîtront par la suite, sont atteints grâce à l'invention qui a pour objet un dispositif d'emport de quadricycle à moteur sur un tracteur agricole, caractérisé en ce qu'il comprend :
- un cadre présentant des points d'attache à des bras de relevage avant ou des bras de relevage arrière d'un tracteur agricole ;
- un support monté mobile sur le cadre entre une position déployée dans laquelle le support s'étend transversalement au cadre, au niveau d'une extrémité inférieure du cadre, et une position rabattue dans lequel le support est rabattu contre le cadre ;

- des moyens de maintien du support dans sa position rabattue ;

et en ce que le support en position déployée forme deux chemins de roulement parallèles l'un à l'autre pour réceptionner les roues d'un quadricycle à moteur,
et en ce que le support est monté à rotation sur le cadre autour d'un axe de rotation, le support étant libre en rotation en direction de sa position rabattue dans sa position déployée,
et en ce que le support comprend des bras de reprise de force s'étendant entre une première extrémité et une seconde extrémité, et présentant une partie centrale entre la première extrémité et la seconde extrémité,
dans lequel :
   - le support est monté mobile sur le cadre par le biais des parties centrales ;
   - la première extrémité présente une surface de butée destinée à être en butée contre une face avant du cadre dans la position déployée du support ;
   - la seconde extrémité présente une surface de butée destinée à être en butée contre une face arrière du cadre dans la position déployée du support.

Grâce au dispositif selon l'invention, il est possible pour un utilisateur d'un tracteur agricole d'emporter sur son tracteur un quadricycle à moteur non couvert, classiquement désignés par l'expression « Quad ». Le dispositif selon l'invention est également susceptible de supporter un quadricycle à moteur tout terrain tel qu'un buggy, tant que son poids reste dans les limites tolérées par la conception du dispositif et de la capacité d'emport du tracteur agricole.

Un tel type de quadricycle est très particulièrement répandu dans les exploitations utilisant des tracteurs agricoles.

La possibilité d'emporter son quadricycle sur son tracteur agricole offre à l'utilisateur du tracteur agricole la possibilité de laisser en place son tracteur agricole pour réaliser un déplacement à l'aide de son quadricycle, puis revenir à son tracteur agricole à l'aide du quadricycle. Ceci évite d'utiliser le tracteur agricole pour un trajet ne nécessitant pas l'usage d'un tel tracteur.

Grâce à la conception du support, lorsque le quadricycle n'est pas monté sur le dispositif, le support peut être positionné en position rabattue pour ne pas augmenter plus que de raison l'encombrement général du tracteur muni du support.

L'usage des bras de relevage permet de descendre le dispositif afin de faire monter le quadricycle sur le support ou de faire descendre le quadricycle du support. Lorsque l'utilisateur du tracteur souhaite utiliser son tracteur agricole, il doit relever le dispositif à l'aide des bras de relevage pour le mettre en hauteur par rapport au sol.

Grâce à la mobilité spécifique du support dans la position déployée, lorsqu'un quadricycle est situé sur le support et que les bras de relevage sont descendus afin de mettre le dispositif au contact du sol alors le support peut adopter une position sur le sol adéquat au relief du sol. Il est évité que le support ne se déforme en étant couplée de manière solidaire au cadre et en étant enfoncé dans le sol.

Enfin, les bras de reprise de force optimisent la capacité d'emport de charges du support et plus généralement du support.

La conception du dispositif est simple et robuste tout en permettant au support de s'adapter librement au relief du terrain sous-jacent au dispositif quand ce dernier est abaissé à l'aide des bras de relevage du tracteur agricole.

Préférentiellement, l'axe de rotation est segmenté en au moins deux segments d'axe, le support étant monté à rotation sur les segments d'axe, et au moins un des points d'attache est situé entre deux segments d'axe de rotation.

Ceci permet de reculer le plus possible l'axe de rotation par rapport au point d'attache, et ainsi de rapprocher le plus possible les masses portées par le dispositif des points d'attache.

Selon une variante préférée, le support présente des paires de cales délimitant des berceaux destinés à accueillir les roues d'un quadricycle à moteur monté sur le support, les cales d'une paire de cale étant destinés à être situées à sous une partie avant et sous une partie arrière d'un des pneus, et en ce que chaque paire de cales est réglable en écartement, ainsi qu'en position le long d'un axe avant/arrière et d'un axe gauche/droite du support.

Il est ainsi possible d'adapter le support au type de quadricycle possédé par l'utilisateur du tracteur agricole. En effet, différents types de quadricycle existent et, entre deux quads différents, il peut exister des différences en termes d'empattement, de taille de roues, et/ou de distance entre les deux essieux des quadricycles.

Préférentiellement, le support est formé par au moins deux parties réglables en écartement l'une de l'autre le long d'un axe gauche/droit du support.

Selon une conception avantageuse, le support est formé par quatre parties réglables, chaque partie réglable portant une cale proximale du cadre et une cadre distale du cadre en position déployée du support, chaque partie réglable comprenant :
- un premier tronçon longitudinal portant la cale proximale ;
- un second tronçon longitudinal monté mobile en translation sur le premier tronçon longitudinal et portant la cale distale.

Cette conception simple économique permet d'adapter aisément et rapidement l'écartement entre la cale proximale et la cale distale à l'empattement du quadricycle à faire monter sur le support.

Cette conception permet aussi de régler précisément la position des cales sur le support afin de rapprocher le plus possible le centre de gravité du dispositif de son cadre, et de diminuer le porte-à-faux créer par le dispositif attelé sur un tracteur agricole.

Selon un mode de réalisation préféré, chaque partie réglable est couplée au cadre par l'intermédiaire d'une pièce présentant un décalage le long de l'axe gauche/droite entre une première partie couplée au cadre, et une seconde partie couplée à la partie réglable, la position des parties réglables les unes par rapport aux autres le long de l'axe gauche/droite étant intervertible.

Ce mode de réalisation permet de renforcer la capacité du dispositif à être adapté à des tailles variées de quadricycle.

Avantageusement, le dispositif comprend une béquille de maintien en position verticale du cadre dans un état désattelé du dispositif d'un tracteur agricole.

Ceci permet de désaccoupler le dispositif d'un tracteur agricole et que le cadre se maintienne dans une position verticale, peu encombrante, et prête à être de nouveau attelée sur un tracteur agricole.

### Brève description des dessins

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- la figure 1 est une représentation schématique selon une vue en perspective avant d'un dispositif selon l'invention, avec un support en position déployée ;
- la figure 2 est une représentation schématique vue de côté du dispositif selon l'invention ;
- la figure 3 est une représentation schématique selon une vue en perspective arrière du dispositif ;
- la figure 4 est une représentation schématique partielle d'un bras de reprise de force du dispositif selon l'invention ;
- la figure 5 est une représentation schématique du dispositif avec son support en position rabattue.

### Description détaillée

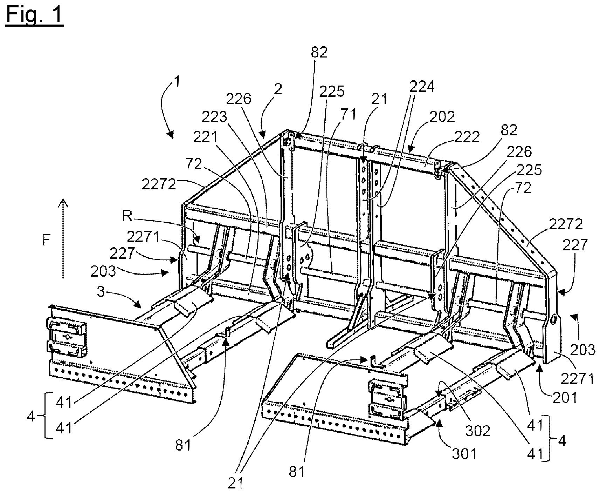

En référence aux figures 1 à 3, un dispositif 1 d'emport de quadricycle à moteur, sur un tracteur agricole, est représenté. Le quadricycle à moteur peut correspondre par exemple à un « quad » ou à un « buggy ».

Le dispositif 1 comprend :
- un cadre 2 destiné à être couplé à des bras de relevage avant ou des bras de relevage arrière d'un tracteur agricole ;
- un support 3 destiné à former une plateforme d'emport d'un quadricycle à moteur.

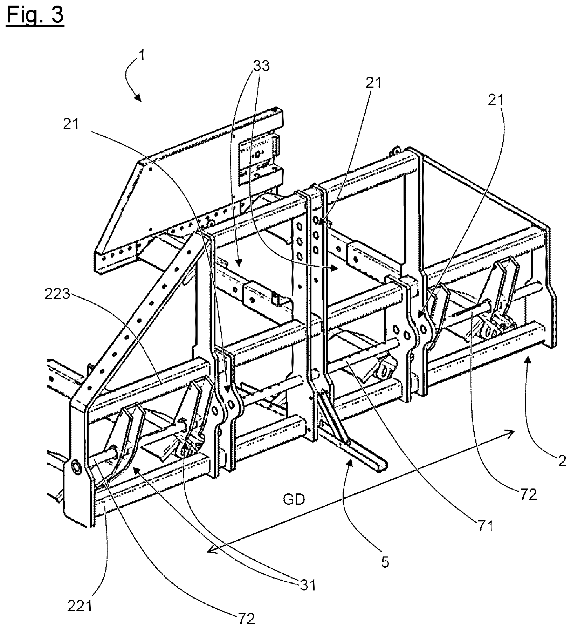

Le cadre 2 est décrit ci-après plus spécifiquement en référence aux figures 1 et 3.

Le cadre 2 présente essentiellement une forme plane. Ainsi, le cadre 2 s'étend :
- en hauteur entre une extrémité inférieure 201 et une extrémité supérieure 202 ;
- latéralement entre deux extrémités latérales 203.

Le cadre 2 s'étend notamment latéralement le long d'un axe gauche/droit GD. Le cadre 2 est formé à partir d'un assemblage d'éléments mécanosoudés.

Le cadre 2 comprend ainsi :
- un premier longeron 221, situé au voisinage de l'extrémité inférieure 201 du cadre 2 ;
- un second longeron 222, situé au voisinage de l'extrémité supérieure 202 du cadre 2 ;
- un longeron central 223, situé entre le premier longeron 221 et le second longeron 222.

Ces longerons s'étendent parallèlement les uns aux autres et sont formés à partir de profilés métalliques tubulaires présentant une importante résistance mécanique.

Le cadre 2 comprend également des éléments couplant les longerons ensemble, dont :
- deux traverses centrales 224 ;
- deux traverses basses 225 ;
- deux traverses intermédiaires 226 ;
- deux profilés latéraux 227.

Les traverses centrales 224 s'étendent parallèlement l'une à l'autre, en ménageant entre elles un volume dont l'usage est décrit par la suite.

Les traverses intermédiaires 226 s'étendent en hauteur parallèlement aux traverses centrales 224. Les traverses centrales 224 et les traverses intermédiaires 226 s'étendent notamment entre le premier longeron 221 et le second logeront 222, en étant également couplées au longeron central 223.

Les traverses basses 225 s'étendent parallèlement aux traverses intermédiaires 226, uniquement entre le premier longeron 221 et le longeron central 223. Chaque traverse basse 225 ménage avec la traverse intermédiaire 226 directement adjacente un volume dont l'usage est décrit par la suite.

Enfin, les profilés latéraux 227 présentent une première partie 2271 s'étendant parallèlement aux autres traverses, une deuxième partie 2272 s'étendant de biais par rapport à la première partie 2271 entre les extrémités du longeron central 223 et les extrémités du second longeron 222.

Le cadre 2 porte un axe de rotation R. Cet axe de rotation R s'étend parallèlement à l'axe gauche/droit GD, et parallèlement au premier longeron 221 ainsi qu'au longeron central 223, qui selon le présent mode de réalisation, encadrent l'axe de rotation R.

L'axe de rotation R est notamment situé à égale distance du premier longeron 221 ainsi que du longeron central 223.

Plus spécifiquement, l'axe de rotation R est porté par les deux traverses centrales 224, les deux traverses basses 225, les deux traverses intermédiaires 226, et les deux profilés latéraux 227.

Selon le présent mode de réalisation l'axe de rotation R est segmenté en trois segments d'axe de rotation.

Plus précisément, l'axe de rotation R est segmenté en un segment central 71, et deux segments latéraux 72. Tel que cela est visible, le segment central 71 et les deux segments latéraux 72 sont alignés, toutefois des espaces sont ménagés entre le segment central 71 et les segments latéraux 72.

Tel qu'évoqué précédemment, le cadre 2 est destiné à être couplé à des bras de relevage avant ou des bras de relevage arrière d'un tracteur agricole.

Ces bras de relevage sont classiquement au nombre de trois à l'avant du tracteur, et de trois à l'arrière du tracteur, et présentent chacun une tête de couplage présentant un trou débouchant s'étendant orthogonalement à un axe longitudinal du tracteur agricole qui présente les bras de relevage. On retrouve notamment deux têtes de couplage « basses » situées à la même hauteur, symétriques l'une de l'autre par rapport à un plan sagittal médian d'un tracteur agricole, et une tête de couplage « haute », s'inscrivant dans le plan sagittal médian du tracteur agricole, en étant située plus haut que les têtes de couplage basses.

Pour permettre l'attelage du dispositif 1 au tracteur agricole, le cadre 2 présente des points d'attache 21 à des bras de relevage avant ou des bras de relevage arrière d'un tracteur agricole.

Ces points d'attaches sont formés par deux éléments encadrant un volume d'accueil d'une tête de couplage, et présentant un perçage centré l'un par rapport à l'autre. Une tête de couplage peut ainsi être insérée entre les deux éléments, en centrant son trou débouchant sur les deux perçages des éléments, puis une clavette doit être insérée au travers des perçage et du trou débouchant puis maintenu en position, par exemple à l'aide d'une goupille.

Le cadre 2 présente au moins trois points d'attaches 21. En l'occurrence, le cadre 2 présente sept points d'attache 21, dont :
- trois points d'attache 21 situés entre les deux traverses centrales 224 qui s'étendent parallèlement l'une à l'autre ;
- deux point d'attache 21 situés entre chaque traverse basse 225 et traverse intermédiaire 226 directement adjacente à la traverse basse 225.

Pour rappel, les deux traverses centrales 224 ménagent entre elles un volume libre et ce volume libre est ainsi destiné à permettre l'insertion d'une tête de couplage haute. A ce niveau, les trois points d'attaches 21 sont régulièrement espacés le long d'une extrémité haute des traverses centrales 224 et permettent d'augmenter la compatibilité du dispositif 1 à des tracteurs agricoles qui pourraient présenter des variations quant à la disposition spatiale de ses bras de relevage.

Pour rappel, chaque traverse basse 225 ménage avec la traverse intermédiaire 226 directement adjacente un volume libre et ce volume libre est ainsi destiné à permettre l'insertion d 'une tête de couplage basse. Au niveau chaque ensemble formé par une traverse basse 225 et une traverse intermédiaire 226, les deux points d'attaches 21 sont décalés l'un de l'autre dans l'épaisseur du cadre 2, c'est-à-dire le long d'un axe orthogonal au plan dans lequel s'étend le cadre 2. Ceci augmente encore la compatibilité du dispositif 1.

Le support 3 est décrit ci-après en référence aux figures 1 à 4.

Le support 3 est monté mobile sur le cadre 2.

Le support est plus précisément mobile entre une position déployée dans laquelle le support 3 s'étend transversalement au cadre 2, au niveau d'une extrémité inférieure 201 du cadre 2, et une position rabattue dans lequel le support 3 est rabattu contre le cadre 2.

Dans sa position déployée, le support 3 forme deux chemins de roulement parallèles l'un à l'autre pour réceptionner les roues d'un quadricycle à moteur. Un quadricycle peut ainsi être avancé, ou descendu du support 3 en position déployée, en roulant sur les chemins de roulement formés par le support 3.

Tel que cela apparaît par la suite, les chemins de roulement sont discontinus, toutefois il est envisageable qu'ils soient continus dans d'autres modes de réalisation envisageable, par exemple dans le cas où le support 3 serait formé par un plancher.

Tel que cela est visible sur la figure 1, le support 3 dans sa position déployée s'étend transversalement à un plan dans lequel s'inscrit le cadre 2.

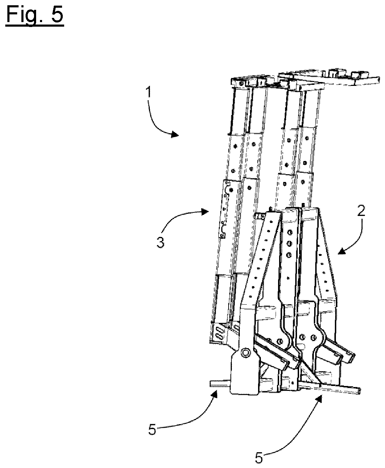

La position rabattue du support 3 est notamment illustrée sur la figure 5.

Le support 3 est monté à rotation sur le cadre 2 autour d'un axe de rotation R.

Selon un autre mode de réalisation envisageable, le support 3 pourrait en outre être monté mobile sur le cadre 2 selon d'autres degrés de mobilité, tel qu'au moins un degré de mobilité selon une translation transversale, préférentiellement orthogonale, au plan dans lequel s'inscrit le support 3 dans sa position déployée.

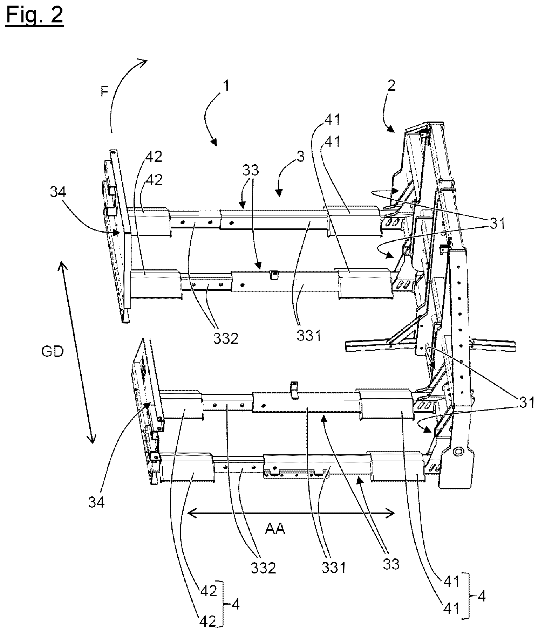

Dans sa position déployée, le support 3 n'est pas immobilisé à l'encontre d'un déplacement selon une direction transversale au support 3, avec un sens (illustré par les flèches F des figures 1 ou 2) orienté depuis une face inférieure 301 du support 3 vers une face supérieure 302 du support 3. Cette capacité permet au dispositif 1 d'adapter le positionnement du support 3 par rapport au relief d'un sol, lorsque les bras de relevage sont descendus de manière à abaisser le support 3 au contact du sol, afin de faire monter un quad sur le support 3, ou de l'en faire descendre.

Par exemple, selon le mode de réalisation envisagé précédemment, le support pourrait se soulever depuis sa position déployée selon la translation transversale au plan.

Selon le mode de réalisation préféré, le support 3 est libre en rotation, autour de l'axe de rotation R, en direction de sa position rabattue depuis sa position déployée.

Ainsi, depuis sa position déployée le support 3 peut s'incliner vers le cadre 2, en tournant autour de l'axe de rotation R, dès que le dispositif 1 est abaissé, et que le support entre en contact avec un sol.

Tel qu'illustré sur la figure 1, le dispositif 1 comprend également des moyens de maintien du support 3 dans sa position rabattue. Ces moyens de maintien comprennent des pattes de maintien 81 présentées par le support, et des brides 82 présentées par le cadre 2. Dans la position rabattue, les pattes de maintien 81 coopèrent avec les brides 82 pour maintenir le support 3 dans sa position rabattue.

En référence aux figures 1 à 3, le support 3 présente des paires de cales 4 délimitant des berceaux destinés à accueillir les roues d'un quadricycle à moteur monté sur le support 3. Ces paires de cales 4 délimitent les deux chemins de roulement.

En d'autres termes, le support 3 présente quatre paires de cales 4 disposées en rectangle, pour former quatre berceaux dans lesquels les quatre roues du quadricycle sont destinées à se loger.

Selon le présent mode de réalisation, chaque paire de cales 4 est réglable en écartement l'une de l'autre. Ceci permet d'adapter chaque paire de cales 4 à des roues de différents diamètres.

Toujours selon le présent mode de réalisation, chaque paie de cales 4 est réglable en position le long d'un axe avant/arrière AA et d'un axe gauche/droite GD du support 3. Ceci permet d'adapter chaque paire de cales 4 à différents quadricycles avec des distances variables en essieux, et des empâtements variables.

Les cales 4 d'une paire de cale 4 sont destinées à être situées à sous une partie avant et sous une partie arrière d'un des pneus.

Une cale 4 prend notamment la forme d'un trapèze présentant sa grande base vers le bas et sa petite base vers le haut. Les cales 4 présentent également un revêtement améliorant la capacité d'une roue à rouler dessus sans glisser, par exemple à l'aide d'une tôle texturée.

Selon un mode de réalisation envisageable, le support 3 pourrait être formé simplement par une plaque, préférentiellement renforcée par des profilés métalliques. Cette plaque serait directement montée à rotation sur l'axe de rotation R.

Dans ce cas, les cales 4 peuvent être simplement vissées sur la plaque formant le support 3.

En référence au figures 1 à 4, des modes de réalisation préférés du support 3 sont détaillés ci-après.

Le support 3 s'étend latéralement le long d'un axe gauche/droit GD, et en longueur le long d'un axe avant/arrière AA.

Tel que cela est visible sur les figures 1 à 3, le support 3 est formé par au moins deux parties réglables 33 en écartement l'une de l'autre le long de l'axe gauche/droit GD du support 3. En l'occurrence, le support 3 est formé par quatre parties réglables 33.

La position des parties réglables 33 le long de l'axe de rotation R peut être ajustée grâce à un pallier présenté par les parties réglables 33 monté coulissant sur l'axe de rotation R, et de clavettes maintenant le pallier une position indexée le long de l'axe de rotation R.

Le pallier présente une rainure s'étendant le long d'un arc d'un rayon, et l'axe de rotation présente une pluralité de trou régulièrement espacés permettant l'insertion d'une des clavettes. Suite à l'alignement de la rainure avec un trou de l'axe de rotation R, l'insertion d'une clavette fixe la position du palier le long de l'axe de rotation R, et le support peut tourner autour de l'axe de rotation R entre sa position déployée dans laquelle la clavette est à une extrémité de la rainure, et sa position rabattue dans laquelle la clavette est à une autre extrémité de la rainure.

Chaque partie réglable 33 porte une cale proximale 41 du cadre 2 et une cale distale 42 du cadre 2 en position déployée du support 3.

Chaque partie réglable 33 comprend également :
- un premier tronçon longitudinal 331 ;
- un second tronçon longitudinal 332 monté mobile en translation sur le premier tronçon longitudinal 331.

La position d'un second tronçon longitudinal 332 peut être fixée le long du premier tronçon longitudinal 331 à l'aide d'un boulonnage.

Ces tronçons longitudinaux sont formés à l'aide de profilés métalliques tubulaires présentant une forte résistance structurelle.

Tel que cela est visible sur les figures, le premier tronçon longitudinal 331 porte une cale proximale 41, tandis que le second tronçon longitudinal 332 porte une cale distale 42. De cette manière, en réglant la position d'un second tronçon longitudinal par rapport au premier tronçon longitudinal, il est également réglé la distance entre les cales.

Le support 3 comprend également des plaques avant 34 couplée aux extrémités des parties réglables 33 distales du cadre 2. Ces plaques avant 34 s'étendent perpendiculairement aux tronçons longitudinaux et forment par exemple des supports pour des organes de signalisation.

Plus spécifiquement, le support 3 comprend deux plaques avant 34 couplant deux parties réglables 33 l'une à l'autre. La position de couplage d'une partie réglable 33 sur une plaque avant 34 est ajustable, autorisant ainsi l'ajustement de l'écartement entre les deux parties réglables 33 couplées à la plaque avant 34.

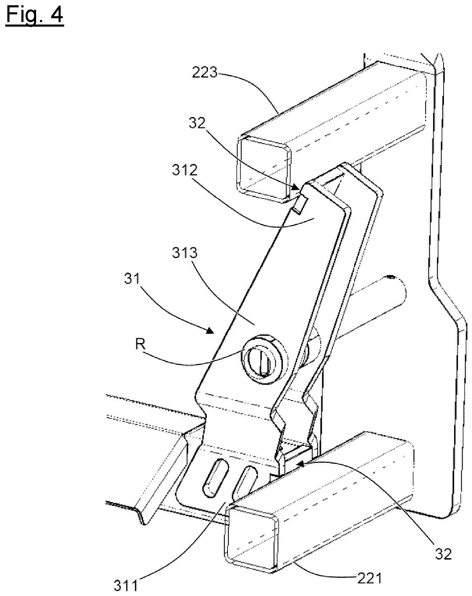

Tel que cela est mieux visible sur les figures 1 et 4, chaque partie réglable 33 est couplée au cadre 2 par l'intermédiaire d'une pièce présentant un décalage le long de l'axe gauche/droite GD entre une première partie couplée au cadre 2, et une seconde partie couplée à la partie réglable 33. Ceci améliore l'adaptabilité du support 3. Par exemple, en référence à la figure 1, une partie réglable 33 peut être positionnée dans l'axe d'une traverse basse 225 et d'une traverse intermédiaire 226 bien que l'axe de rotation R soit interrompu entre ces deux traverses.

De plus, la position des parties réglables 33 les unes par rapport aux autres le long de l'axe gauche/droite GD est intervertible. Ceci optimise l'adaptabilité du support 3 à différents types de quadricycles.

Selon le présent mode de réalisation, et en référence aux figures 2 à 4, le support 3 comprend des bras de reprise de force 31.

Ces bras forment en l'occurrence les pièces évoquées précédemment qui couplent chaque partie réglable 33 au cadre 2.

Ces bras de reprise de force 31 s'étendent entre une première extrémité 311 et une seconde extrémité 312.

Chaque bras de reprise de force 31 présente une partie centrale 313 entre la première extrémité 311 et la seconde extrémité 312.

Le support 3 est monté mobile sur le cadre 2 par le biais des parties centrales 313.

Selon le présent mode de réalisation, chaque premier tronçon longitudinal 331 s'étend longitudinalement depuis la première extrémité 311 d'un bras de reprise de force 31 (chaque partie réglable présentant un bras de reprise de force).

La première extrémité 311 du bras de reprise de force 31 présente une surface de butée 32 destinée à être en butée contre une face avant du cadre 2 dans la position déployée du support 3, tandis que la seconde extrémité 312 présente une surface de butée 32 destinée à être en butée contre une face arrière du cadre 2 dans la position déployée du support 3.

Plus précisément, dans la position déployée du support 3, la surface de butée 32 de la première extrémité 311 vient au contact du premier longeron 221, tandis que la surface de butée 32 de la seconde extrémité 312 vient au contact du longeron central 223. Ceci optimise la capacité d'emport de charge du dispositif 1 sur son support 3.

En référence aux figures 3 et 5, le dispositif 1 comprend une béquille 5 de maintien en position verticale du cadre 2 dans un état désattelé du dispositif 1 d'un tracteur agricole.

Cette béquille 5 prend la forme de deux bras déployables de part et d'autre du cadre 2, transversalement au plan dans lequel le cadre 2 s'étend. Ces deux bras doivent bien entendu être repliées lorsque le dispositif 1 est attelé sur un tracteur agricole, et que le tracteur se déplacer avec le dispositif 1.

Dans la configuration illustrée par la figure 5, le dispositif 1 peut être déposé par un tracteur agricole pour être stocké. Cette position facilite également l'attelage du dispositif 1 sur un tracteur agricole.

Selon d'autres modes de réalisation envisageable, le dispositif 1 peut comprendre, indépendamment ou en combinaison :
- des amortisseurs, notamment de fin de course, pour le déploiement du support 3, afin de faciliter et sécuriser le passage du support 3 de sa position rabattue à sa position déployée ;
- un treuil pour rabattre le support 3 vers sa position rabattue ;
- des accessoires couplés sur le cadre 2, tel qu'une boite de rangement ;
- des sangles de fixation, par exemple pour sécuriser un quadricycle sur la support 3, bien qu'il ait été constaté que le seul poids du quadricycle permet de maintenir ce dernier en position sur le support lors du déplacement du tracteur agricole.

Le dispositif 1 précédemment décrit est adapté à l'emport d'un quadricycle à moteur par un tracteur agricole. Toutefois, il est envisageable que le dispositif 1 soit également utilisé pour l'emport d'un véhicule à deux roues, tel qu'une moto ou un vélo, par exemple en complément d'un coffre monté amovible sur le support, ou qu'il soit utilisé pour l'emport d'un tricycle.

## Revendications

1. Dispositif (1) d'emport de quadricycle à moteur sur un tracteur agricole, **caractérisé en ce qu'**il comprend :
- un cadre (2) présentant des points d'attache (21) à des bras de relevage avant ou des bras de relevage arrière d'un tracteur agricole ;
- un support (3) monté mobile sur le cadre (2) entre une position déployée dans laquelle le support (3) s'étend transversalement au cadre (2), au niveau d'une extrémité inférieure (201) du cadre (2), et une position rabattue dans lequel le support (3) est rabattu contre le cadre (2) ;
- des moyens de maintien du support (3) dans sa position rabattue ;
et **en ce que** le support (3) en position déployée forme deux chemins de roulement parallèles l'un à l'autre pour réceptionner les roues d'un quadricycle à moteur,
et **en ce que** le support (3) est monté à rotation sur le cadre (2) autour d'un axe de rotation (R), le support (3) dans sa position déployée étant libre en rotation en direction de sa position rabattue,
et **en ce que** le support (3) comprend des bras de reprise de force (31) s'étendant entre une première extrémité (311) et une seconde extrémité (312), et présentant une partie centrale (313) entre la première extrémité (311) et la seconde extrémité (312),
dans lequel :
- le support (3) est monté mobile sur le cadre (2) par le biais des parties centrales (313) ;
- la première extrémité (311) présente une surface de butée (32) destinée à être en butée contre une face avant du cadre (2) dans la position déployée du support (3) ;
- la seconde extrémité (312) présente une surface de butée (32) destinée à être en butée contre une face arrière du cadre (2) dans la position déployée du support (3).

2. Dispositif (1) selon la revendication précédente, **caractérisé en ce que** l'axe de rotation (R) est segmenté en au moins deux segments d'axe, le support (3) étant monté à rotation sur les segments d'axe,
et **en ce que** au moins un des points d'attache (21) est situé entre deux segments d'axe de rotation.

3. Dispositif (1) selon l'une quelconque des revendications précédentes, **caractérisé en ce que** le support (3) présente des paires de cales (4) délimitant des berceaux destinés à accueillir les roues d'un quadricycle à moteur monté sur le support (3), les cales (4) d'une paire de cale (4) étant destinées à être situées à sous une partie avant et sous une partie arrière d'un des pneus,
et **en ce que** chaque paire de cales (4) est réglable en écartement l'une de l'autre, ainsi qu'en position le long d'un axe avant/arrière (AA) et d'un axe gauche/droite (GD) du support (3).

4. Dispositif (1) selon la revendication précédente, **caractérisé en ce que** le support (3) est formé par au moins deux parties réglables (33) en écartement l'une de l'autre le long de l'axe gauche/droit (GD) du support (3).

5. Dispositif (1) selon la revendication 4, **caractérisé en ce que** le support (3) est formé par quatre parties réglables (33), chaque partie réglable (33) portant une cale proximale (41) du cadre (2) et une cale distale (42) du cadre (2) en position déployée du support, chaque partie réglable (33) comprenant :
- un premier tronçon longitudinal (331) portant la cale proximale (41) ;
- un second tronçon longitudinal (332) monté mobile en translation sur le premier tronçon longitudinal (331) et portant la cale distale (42).

6. Dispositif (1) selon l'une quelconque des revendications 4 et 5, **caractérisé en ce que** chaque partie réglable (33) est couplée au cadre (2) par l'intermédiaire d'une pièce présentant un décalage le long de l'axe gauche/droite (GD) entre une première partie couplée au cadre (2), et une seconde partie couplée à la partie réglable (33),
la position des parties réglables (33) les unes par rapport aux autres le long de l'axe gauche/droite (GD) étant intervertible.

7. Dispositif (1) selon l'une quelconque des revendications précédentes, **caractérisé en ce qu'**il comprend une béquille (5) de maintien en position verticale du cadre (2) dans un état désattelé du dispositif (1) d'un tracteur agricole.
